Europäisches Patentamt

**European Patent Office**

**Office européen des brevets**

(19)

(11) Numéro de publication: **0 143 014**
**A1**

## DEMANDE DE BREVET EUROPEEN

(12)

(21) Numéro de dépôt: **84401818.4**

(22) Date de dépôt: **13.09.84**

(51) Int. Cl.⁴: **B 23 H 9/00**
**C 25 F 7/00, G 02 B 5/08**
**B 23 H 9/16**

(30) Priorité: **23.09.83 FR 83115133**

(43) Date de publication de la demande:
**29.05.85 Bulletin 85/22**

(84) Etats contractants désignés:
**CH DE FR GB IT LI**

(71) Demandeur: **Leteurtre, Jean**
**77, rue J. Vatonne**
**F-91190 Gif-sur-Yvette(FR)**

(72) Inventeur: **Leteurtre, Jean**
**77, rue J. Vatonne**
**F-91190 Gif-sur-Yvette(FR)**

(74) Mandataire: **Mongrédien, André et al,**
**c/o BREVATOME 25, rue de Ponthieu**
**F-75008 Paris(FR)**

(54) **Procédé d'usinage de precision, application a l'usinage de la surface reflechissante d'un miroir et miroir obtenu selon ce procédé.**

(57) La surface à usiner présentant une forme connue (8), à la suite d'un usinage préalable selon une technique connue, on donne à cette surface sa forme (6) définitive par balayage d'un jet d'électrolyte, en asservissant la quantité d'électricité délivrée par le jet en chaque point proportionellement à une profondeur d'usinage à effectuer en ce point pour passer de la forme connue (8) à la forme définitive (6). On peut notamment réaliser par cette technique des miroirs asphériques de très haute qualité. De préférence, le miroir est constitué d'un substrat de graphite sur lequel sont déposées une ou plusieurs couches métalliques (rhénium, rhodium, molybdène, tungstène).

FIG. 5

EP 0 143 014 A1

## PROCEDE D'USINAGE DE PRECISION, APPLICATION A L'USINAGE DE LA SURFACE REFLECHISSANTE D'UN MIROIR ET MIROIR OBTENU SELON CE PROCEDE

L'invention concerne un procédé d'usinage de précision de la surface d'une pièce en un matériau conducteur de l'électricité, l'application de ce procédé à l'usinage de la surface réfléchissante d'un miroir, ainsi qu'un miroir pour faisceau lumineux réalisé selon ce procédé.

Les procédés actuellement utilisés pour usiner la surface d'une pièce avec la meilleure définition de forme et la rugosité la plus faible reposent tous sur le phénomène physique de la coupe, que ce soit avec un outil de diamant ou par rodage de qualité optique.

Le caractère mécanique ou mécano-chimique des procédés d'usinage actuels les plus performants conduit notamment aux inconvénients suivants :

- quelle que soit la taille de l'outil de coupe, celui-ci laisse sur la pièce des stries conduisant dans tous les cas à une rugosité de surface de la pièce ;

- l'action mécanique de l'outil de coupe sur la pièce engendre dans celle-ci des contraintes pouvant conduire ultérieurement à la création de défauts de surface ;

- il existe dans tous les cas une profondeur de passe minimale en-dessous de laquelle aucune retouche n'est possible ;

- la profondeur de passe est toujours uniforme en tout point de la surface, de sorte que certaines surfaces complexes telles que des surfaces asphériques sont très difficiles à obtenir avec un usinage précis ;

- enfin, la précision des usinages ainsi effectués est limitée par les déformations ou les vibrations de l'objet usiné ou de la machine d'usinage, ainsi que par les échauffements de la pièce.

0143014

Comme l'illustre notamment le brevet français n° 1 526 671, il est connu par ailleurs de réaliser l'ébavurage électrochimique d'une pièce en projetant un jet d'électrolyte sur la partie de la pièce à ébavurer, la quantité d'électricité globalement reçue par la pièce étant contrôlée en fonction de la masse de matière à dissoudre.

L'invention a principalement pour objet un nouveau procédé d'usinage de précision utilisant un jet d'électrolyte projeté sur la surface à usiner et ne présentant aucun des inconvénients des procédés d'usinage les plus précis connus à ce jour en autorisant notamment une rugosité de surface exceptionnellement faible, sans aucun écrouissage du matériau, avec une profondeur de passe variable à volonté sur toute la surface et qui n'est limitée par aucune valeur minimale et avec une précision qui n'est limitée ni par les déformations ou les vibrations de l'objet usiné ou de la machine d'usinage, ni par les échauffements de la pièce qui restent faibles et de plus très bien contrôlables.

La présente invention a aussi pour objet l'application d'un tel procédé d'usinage à la réalisation de miroirs pour faisceaux lumineux tels que les miroirs paraboliques hors axe qui sont utilisés notamment pour focaliser les faisceaux laser de puissance.

Enfin, l'invention a également pour objet un miroir obtenu par ce procédé et dont la structure est conçue de façon à présenter une dureté superficielle satisfaisante afin qu'il ne se raye pas facilement, tout en assurant une bonne transmission de la chaleur à travers le miroir afin de pouvoir être utilisé dans le cas de faisceaux lumineux intenses.

Conformément à l'invention, il est donc proposé un procédé d'usinage de précision de la surface

d'une pièce en un matériau conducteur de l'électricité, selon lequel on effectue un usinage préalable par une technique d'usinage connue, afin de donner à la surface à usiner une forme connue, caractérisé en ce qu'on effectue ensuite un usinage de la surface par balayage d'un jet d'électrolyte sur toute la surface à usiner, en asservissant la quantité d'électricité délivrée par le jet en chaque point de ladite surface proportionnellement à une profondeur d'usinage à effectuer en ce point pour passer de ladite forme connue à une forme finale désirée pour ladite surface.

Dans ce procédé, il est à noter que le balayage du jet d'électrolyte sur la surface à usiner peut être réalisé soit en déplaçant le jet par rapport à la pièce, celle-ci restant fixe, soit en faisant défiler chaque point de la pièce devant un jet fixe, soit enfin en combinant ces deux mouvements.

On remarquera également que cette nouvelle méthode d'usinage peut être utilisée de façon tout à fait générale pour tous les métaux et les semi-conducteurs, c'est-à-dire les matériaux qui conduisent, même peu, l'électricité. Un cas particulièrement intéressant est le verre, rendu conducteur par injection d'électrons vers 200°C.

Selon le cas, la quantité d'électricité délivrée par le jet peut être asservie soit en modulant la vitesse de balayage du jet sur ladite surface, soit en modulant l'intensité du courant circulant dans le jet d'électrolyte.

Conformément à un premier aspect de l'invention utilisant notamment l'absence de profondeur minimale de passe dans le procédé selon l'invention et la précision et la pureté des mouvements permis par ce procédé, l'usinage par balayage d'un jet d'électrolyte est effectué en asservissant la quantité d'électricité délivrée par le jet en chaque point de la surface à rester constante, afin d'obtenir une retouche d'épais-

B 8313 GP

seur constante, indépendamment de la forme de la surface.

Selon un deuxième aspect du procédé de l'invention découlant notamment de la possibilité offerte par celui-ci de faire varier à volonté la profondeur de passe entre chaque point de la surface, l'usinage par balayage d'un jet d'électrolyte est effectué en asservissant la quantité d'électricité délivrée par le jet en chaque point de la surface à varier selon une loi donnée, afin de passer de ladite forme connue à une forme finale différente de celle-ci.

Ce dernier aspect de l'invention permet de réaliser des surfaces asphériques de qualité excellente pour un prix de revient particulièrement intéressant. En effet, la profondeur d'usinage variable continuement de l'usinage par jet d'électrolyte permet de partir d'une ébauche dont la forme est facile à obtenir par les méthodes d'usinage conventionnelles. Par rapport à la réalisation d'une surface asphérique à l'aide d'un procédé de coupe connu, on supprime donc un déplacement de haute précision.

Ce deuxième aspect de l'invention est particulièrement avantageux dans l'application à l'usinage de la surface réfléchissante d'un miroir. Dans ce cas, on peut en effet effectuer l'usinage préalable du miroir en donnant à la surface à usiner une forme connue différente de la forme de la surface réfléchissante à réaliser et présentant, au centre du miroir, des rayons de courbure principaux identiques à ceux de ladite surface réfléchissante.

Dans le cas particulier où la surface réfléchissante à réaliser est une surface parabolique, on effectue l'usinage préalable de façon à donner à la surface à usiner la forme d'un tore dont l'axe est confondu avec l'axe de la surface parabolique et dont le cercle générateur est concentrique avec le cercle osculateur défini au centre du miroir par la parabole

génératrice de ladite surface parabolique, et présente un rayon inférieur d'une valeur prédéterminée à celui du cercle osculateur.

Selon un troisième aspect de l'invention, un miroir usiné selon ce procédé comprend un substrat en graphite et au moins une couche de métal formant la surface réfléchissante du miroir.

Un miroir réalisé de cette manière constitue un excellent compromis entre l'obtention d'une dureté superficielle suffisante pour que le miroir ne se raye pas trop facilement et l'obtention d'une bonne conduction thermique à travers le miroir permettant d'éviter que celui-ci ne se déforme trop sous l'effet des gradients thermiques internes lorsqu'il est utilisé pour des faisceaux lumineux intenses. La réalisation du substrat du miroir en graphite permet en outre de disposer d'un miroir particulièrement léger et présentant un faible coefficient de dilatation.

Le métal formant la surface réfléchissante du miroir peut être du tungstène, du molybdène, de rhénium ou du rhodium, ces métaux étant déposés soit par électrolyse, soit par décomposition d'une phase vapeur (vapodéposition) pour former une couche de quelques centaines de microns d'épaisseur. Il est à noter que les métaux ainsi déposés sous forme de couches minces sont extrêmement purs et donc meilleurs conducteurs thermiques que les mêmes métaux lorsqu'ils se présentent à l'état massif. De plus, les métaux déposés par vapodéposition présentent aussi l'avantage d'être exempts de cavités, fissures ou retassures. Ces qualités métallurgiques des métaux déposés font que la qualité optique de la surface n'est jamais limitée par le matériau, mais par la qualité de son usinage.

De préférence, on dispose entre le substrat

0143014

en graphite et la couche de métal une sous-couche intermédiaire de rhénium d'environ cinq microns d'épaisseur permettant de barrer la diffusion du carbone dans la couche métallique. L'ensemble du miroir ainsi réalisé résiste remarquablement bien à la fatigue thermique.

Comme pour tous les autres miroirs, la surface réfléchissante du miroir peut être dorée après son usinage (le coefficient réflecteur de l'or atteignant 98%) ou encore revêtue de couches diélectriques amenant le coefficient réflecteur à une valeur très proche de l'unité.

On décrira maintenant, à titre d'exemple non limitatif, différents modes de réalisation de l'invention en se référant aux dessins annexés dans lesquels :

- la figure 1 illustre de façon très schématique le principe de l'usinage selon l'invention,

- les figures 2a et 2b illustrent de façon très schématique la réalisation d'une passe d'épaisseur constante respectivement à l'aide d'un outil de coupe selon la technique antérieure et à l'aide d'un jet d'électrolyte conformément à l'invention,

- les figures 3 et 4 illustrent respectivement le montage excentré d'un cylindre à retoucher et le résultat de cet usinage excentré à l'aide d'un jet électrolytique conformément à l'invention,

- la figure 5 illustre de façon schématique le principe de réalisation d'un miroir parabolique conformément au procédé selon l'invention, et

- les figures 6 et 7 représentent de façon schématique un exemple de réalisation d'un appareil permettant de réaliser la rectification mécanique, puis la finition électrolytique sans démontage des pièces, respectivement d'un miroir unique ou d'une

0143014

couronne de miroirs.

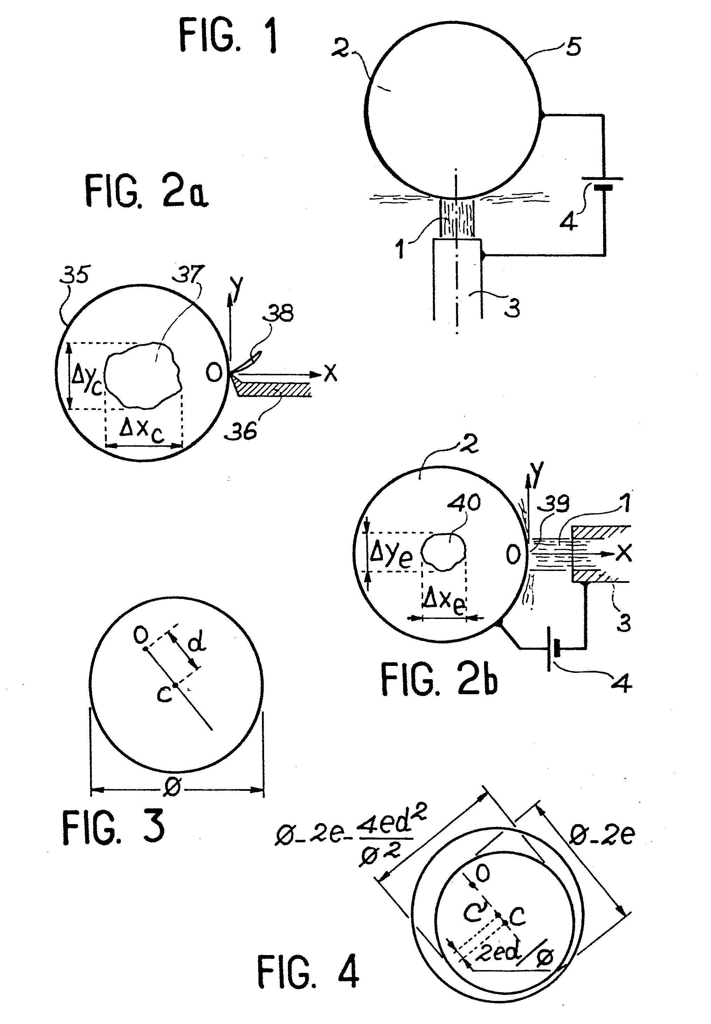

On a représenté sur la figure 1 une pièce 2 dont la surface externe 5 a été usinée par un procédé d'usinage de précision traditionnel tel que le rodage ou la rectification, permettant de réaliser des surfaces géométriques simples (par exemple planes, cylindriques ou sphériques) avec une précision de forme qui peut atteindre quelques micromètres. La forme de la surface 5 (cylindrique dans l'exemple représenté) a pour caractéristiques d'être très bien définie et de dimensions supérieures à celles de la forme finale à réaliser. Pour cette raison et en dépit de la précision de l'usinage de la surface 5, on appellera cette pièce "ébauche" dans la suite du texte.

A partir de la connaissance de la forme de la surface 5 on peut, comme on le verra plus en détail ultérieurement soit réaliser une retouche d'épaisseur constante de cette surface, soit modifier la forme de cette surface pour passer de la forme géométrique simple et bien définie préalablement usinée à une forme géométrique plus complexe très difficile à obtenir par les procédés classiques.

Dans les deux cas, la profondeur de passe à réaliser en chaque point de la pièce est parfaitement connue, de telle sorte que la réalisation de l'étape de finition proprement dite illustrée sur la figure 1 peut être programmée sans difficulté.

Conformément à l'invention, cette étape de finition est réalisée par dissolution électrolytique locale du matériau, grâce à un jet d'électrolyte 1 projeté sur la surface 5 de l'ébauche 2 par une cathode tubulaire 3. Ce jet est balayé sur toute la surface de l'objet à réaliser, de façon que chaque point de la surface de l'ébauche soit arrosé plusieurs fois par le jet au cours de l'usinage électrolytique (appelé aussi

B 8313 GP

usinage électrochimique). Au cours de cet usinage, l'objet 2 constitue l'anode reliée électriquement au pôle positif du générateur de courant 4.

En pratique, le jet d'électrolyte est formé par un tube auquel est associée une cathode. Le tube et la cathode peuvent être confondus si l'on utilise des tubes en acier ou en titane, permettant d'obtenir des jets de diamètre supérieur ou égal à 0,1 mm. Le jet peut aussi être obtenu au moyen d'un tube de verre, la cathode étant alors constituée par un fil métallique (en acier inoxydable ou en platine) ou par un fil de graphite placé loin en amont de l'orifice de sortie du jet. Ces tubes de verre permettent la réalisation de jets très fins, de diamètre inférieur à dix microns. L'utilisation de tubes de verre préalablement fermés, dans lesquels on perce un canal par dissolution chimique sélective du verre le long de la trace laissée par le passage d'une particule lourde très fortement énergétique (par exemple un fragment de fission d'uranium) permet d'obtenir des jets d'électrolyte encore plus fins (un micron de diamètre).

Dans tous les cas, le jet d'électrolyte est gainé de microbulles d'hydrogène formées par hydrolyse de l'électrolyte. Lorsque le tube est métallique, ces microbulles d'hydrogène tapissent la surface extérieure du jet et de l'écoulement après impact sur l'anode, de sorte qu'elles ne viennent pas au contact de la pièce usinée et ne gênent nullement l'usinage. En revanche, pour les outils en verre, un piège à bulles doit être prévu pour prévenir la sortie des bulles d'hydrogène par l'orifice du jet, qui serait alors momentanément interrompue.

Le circuit de l'électrolyte en amont du tube est réalisé à l'aide de tous moyens connus permettant de réaliser les fonctions suivantes : filtrage des poussières (précipité d'oxydes, etc...), suppression des bulles gazeuses à l'exception de celles formées par le passage du courant d'électrolyse, régulation de la température et de la pression du jet d'électrolyte, et enfin localisation limitative de la circulation du courant d'électrolyse entre la cathode tubulaire qui forme le jet et l'anode constituée par la pièce usinée.

Comme on l'a mentionné précédemment, l'usinage électrolytique de la pièce est effectué en balayant le jet sur toute la surface à retoucher de cette pièce. Ce mouvement relatif entre la pièce usinée et le jet ne dépend que des usinages à effectuer et n'est pas nécessairement semblable à celui qui serait effectué par un outil de coupe traditionnel relativement à la même pièce à usiner. En effet, l'usinage par jet d'électrolyte présente l'avantage essentiel de pouvoir travailler en totale indépendance de la distance entre l'objet usiné et l'orifice du tube formant le jet d'électrolyte. C'est la quantité d'électricité, c'est-à-dire le produit de l'intensité du courant d'électrolyse par le temps de cette électrolyse, qui détermine l'action électrolytique. En d'autres termes, si la hauteur de colonne de liquide du jet varie, mais si le générateur de courant maintient constante l'intensité du courant débité, la différence de potentiel entre l'objet usiné et la cathode varie mais l'action électrolytique n'en est nullement affectée.

Cette propriété est illustrée sur les figures 2a et 2b qui montrent respectivement l'exécution d'une retouche sur une ébauche cylindrique à l'aide d'un outil de coupe tel qu'un tour et à l'aide d'un jet d'électrolyte conformément à l'invention.

Lorsque la retouche d'épaisseur constante est effectuée à l'aide d'un outil de coupe traditionnel 36, comme l'illustre la figure 2a, le centre instantané du cylindre 35 fluctue dans un domaine 37 d'amplitude $\Delta X_c$ et $\Delta Y_c$ suivant les axes OX et OY, l'axe OX étant orienté radialement et coupant l'axe du cylindre alors que l'axe OY est orienté tangentiellement à ce dernier.

L'amplitude du domaine d'erreur 37 ainsi défini représente le cumul des imperfections de la machine, des déformations et vibrations de l'objet usiné et de la machine dûes à la contrainte nécessairement appliquée par l'outil de coupe afin de former le copeau 38, et aussi l'usure de l'outil et les dilatations thermiques de l'objet et de la machine. L'amplitude des imperfections $\Delta X_c$ dans le sens de l'axe OX se répercute au premier ordre sur l'objet usiné, alors que l'amplitude $\Delta Y_c$ selon l'axe OY n'intervient qu'au second ordre.

Si l'on se reporte maintenant à la figure 2b illustrant la situation comparable lors de l'exécution d'une retouche d'épaisseur constante à l'aide du jet d'électrolyte 1, dans un système d'axes OXY comparable à celui de la figure 2a, mais avec le point de stagnation 39 du jet pour origine des axes, le centre instantané de rotation du cylindre 2 fluctue dans un domaine 40 d'amplitude $\Delta X_e$ et $\Delta Y_e$ respectivement selon les axes OX et OY.

On observera tout d'abord que ce domaine est sensiblement plus petit que le domaine 37 sur la figure 2a. Cela s'explique en premier lieu par le fait que l'outil ne s'use pas puisqu'il n'y a pas de contact solide-solide, donc pas de vibration induite ni dans l'objet ni dans la machine, et aussi par le fait que la contrainte exercée sur la pièce usinée par le jet est très faible, ce qui facilite considérablement la pureté des mouvements de la machine. Cela s'explique

en premier lieu par le fait que l'outil ne s'use pas puisqu'il n'y a pas de contact solide-solide, donc pas de vibration induite ni dans l'objet ni dans la machine, et aussi par le fait que la contrainte exercée sur la pièce usinée par le jet est très faible, ce qui facilite considérablement la pureté des mouvements de la machine. Cela s'explique aussi par le fait que les dilatations thermiques très bien contrôlées peuvent être rendues, comme on le verra ultérieurement, aussi petites que voulu, notamment par l'emploi d'un courant d'électrolyse pulsé. Les erreurs de positionnement $\Delta X_e$ et $\Delta Y_e$ ne résultent donc que des imperfections de la machine, des fluctuations du jet d'électrolyte et, au deuxième ordre seulement, de l'échauffement de l'objet usiné.

Si on considère tout d'abord l'erreur $\Delta X_e$ selon l'axe OX, elle n'influe nullement sur l'usinage de l'anode. En effet, dans l'hypothèse choisie où on effectue une passe d'épaisseur aussi constante que possible, l'intensité de courant d'électrolyse est simplement régulée à une valeur constante, ce qui peut être réalisé avec une grande précision. La fluctuation $\Delta X_e$ de hauteur de la colonne de liquide qui forme le pont électrique entre la cathode et l'anode usinée induit donc une fluctuation de tension aux bornes du générateur 4 (figure 1) mais n'a aucune implication sur l'usinage de l'anode.

Par ailleurs, l'erreur de positionnement du jet $\Delta Y_e$ selon l'axe OY, qui est sensiblement inférieur à l'erreur $\Delta Y_c$ dans le cas d'un outil de coupe, ne produit que des défauts d'usinage du deuxième ordre.

Les figures 3 et 4 illustrent de façon plus précise les conséquences du montage excentré d'une pièce d'un diamètre $\emptyset$ supposé uniforme (figure 3) sur la réalisation d'une retouche d'épaisseur $e$ souhaitée

B 8313 GP

constante par usinage à l'aide d'un jet d'électrolyte conformément à l'invention. A cet effet, on prendra pour hypothèses que le cylindre initial est parfait (section idéalement circulaire), que la vitesse de rotation de la pièce est constante (ce qui est facilité par l'absence de réaction d'outil) et que l'intensité du courant d'électrolyse est constante.

Si l'on suppose comme l'illustre de façon très accentuée la figure 3 que le cylindre de centre C est monté excentré de la distance $\underline{d}$ dans le mandrin de centre O, et que l'axe du jet coupe l'axe du mandrin on voit sur la figure 4 que l'usinage par jet d'électrolyte conduit à la réalisation d'un autre cylindre dont le centre C' est décalé du précédent de la quantité $\frac{2ed}{\emptyset}$. Toutefois, ce nouveau cylindre reste quasi-circulaire puisque les diamètres pris selon la direction du décentrement et une direction perpendiculaire ne diffèrent que de la quantité $4ed^2/\emptyset^2$.

En conclusion, un cylindre hors cote de $e/{}^{+}_{-}\Delta e$ peut, sans aucune conséquence gênante, être retouché à la cote (en une seule opération) malgré un centrage défectueux de la distance $\underline{d}$ telle que $4ed^2/\emptyset^2$ $\Delta e$, si la position de l'axe du cylindre est indifférente, ou telle que $2ed/\emptyset$ $\Delta e$, si le cylindre final doit avoir le même axe que le cylindre initial.

Si on illustre par un exemple numérique les conditions qui viennent d'être énoncées, on voit qu'il est possible de réaliser une retouche de 12 µm (avec $\Delta e$ = 2 µm) sur un cylindre de 10 mm de diamètre, même si le cylindre est monté excentré de $\underline{d}$ = 2 mm, dans le cas où l'axe du cylindre n'importe pas et de $\underline{d}$ = 0,4 mm, dans le cas où cet axe doit être le même que celui du cylindre initial.

Bien entendu, l'exemple qui vient d'être décrit en détail à propos de la réalisation de retouche

sur des pièces cylindriques, afin notamment d'assurer la finition d'un ajustement mâle-femelle, peut être généralisé à l'exécution de toute retouche sur une profondeur d'épaisseur constante à partir d'une ébauche de forme quelconque réalisée au préalable par un usinage traditionnel de précision à l'aide d'un outil de coupe tel qu'une machine de polissage.

Dans tous les cas, on observera qu'en plus de l'avantage précédemment mentionné, il n'existe pas de limite inférieure à la profondeur de la retouche qui peut être réalisée conformément à l'invention et que l'utilisation d'un jet d'électrolyte permet d'effacer de la surface toutes les micro-rugosités inhérentes aux procédés d'usinage traditionnels.

De plus, s'il se produit un échauffement $\Delta t$ de l'électrolyte par effet Joule, cet échauffement peut être abaissé, pour une intensité donnée (choisie pour optimiser les conditions de polissage), en réduisant la hauteur de la colonne liquide du jet et en augmentant la vitesse de ce jet. On peut aussi travailler en courant pulsé, en attendant entre deux impulsions un temps suffisant pour que l'échauffement de l'électrolyte ne se transmette pas à la pièce usinée.

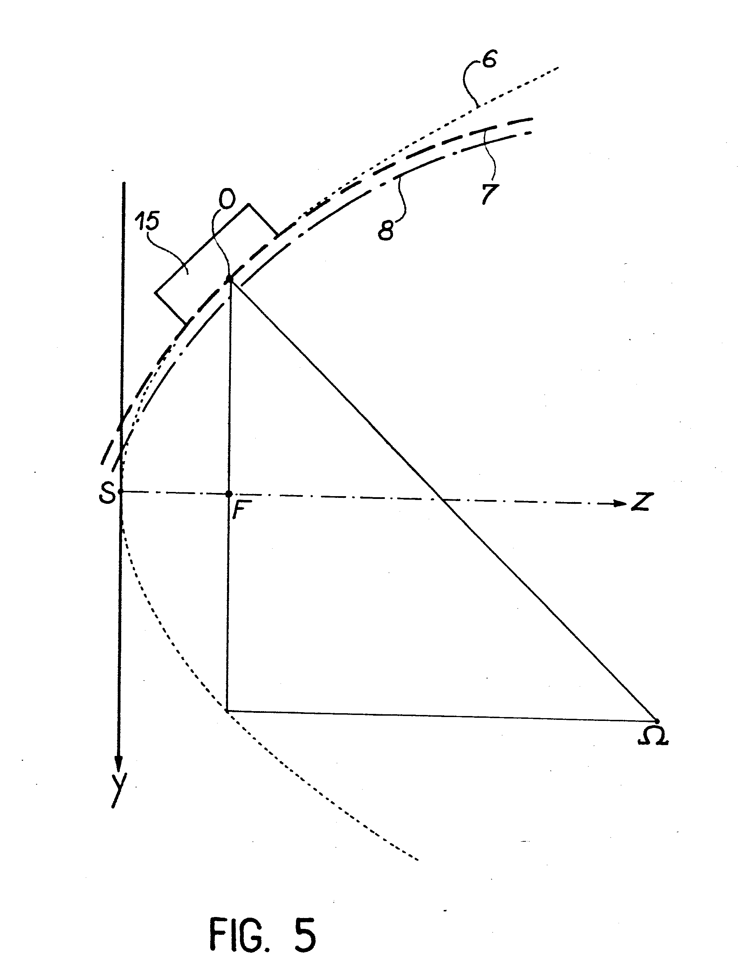

Conformément à un deuxième aspect de l'invention que l'on décrira maintenant en se référant aux figures 5 à 7, ce procédé d'usinage permet également d'usiner une surface de forme complexe ou asphérique, telle qu'une surface parabolique, à partir d'une ébauche présentant une surface de forme géométriquement plus simple et, par conséquent, plus facile à réaliser par les procédés de coupe traditionnels.

Ce deuxième aspect de l'invention va maintenant être décrit à titre d'exemple non limitatif, dans le cas particulier de la finition d'un miroir parabolique hors axe défléchissant de 90° le rayon moyen du

faisceau incident.

Comme l'illustre la figure 5, le centre O de ce miroir 15 est le point de la parabole 6 dont la projection sur l'axe 3 constitue le foyer $\underline{f}$ de la parabole 6. Dans le système d'axes orthonormés (X, Y, Z) dont l'origine S est placée au sommet du paraboloïde et dont l'axe Z est confondu avec l'axe du paraboloïde répondant à l'équation $X^2 + Y^2 = 4aZ$, les coordonnées du foyer $\underline{f}$ sont (0, 0, a). Dans le plan (Y,S,Z) qui est celui de la figure 5, les coordonnées du centre O du miroir et celles du centre $\Omega$ du cercle auscultateur 7 en O à la parabole 6 sont respectivement (0, 2a, a) pour le point O et (0, −2a, 5a) pour le point $\Omega$ .

Sur la figure 5, on a également représenté le cercle 8, de centre $\Omega$ , qui correspond conformément à l'invention à l'ébauche du miroir obtenue à l'aide d'un procédé de coupe traditionnel tel que la rectification. Le rayon R de ce cercle 8 est légèrement inférieur à celui du cercle osculateur 7. Ce rayon R est choisi de sorte que, en tout point du miroir 15 centré en O et de diamètre D, sa distance à la parabole 6 excède une valeur prédéterminée. Cette valeur prédéterminée peut notamment être choisie de façon à éliminer en tout point lors de l'usinage électrolytique la couche de métal écroui par l'usinage mécanique préalable (cette profondeur minimale peut être par exemple d'une vingtaine de microns).

Les distances $\Delta R(\alpha)$ entre le cercle 8 représentant l'ébauche et la parabole 6 représentant le miroir après l'usinage électrolytique, sur des rayons faisant un angle $\alpha$ avec la droite O$\Omega$ se calculent aisément. Le tableau ci-après donne à titre d'exemple non limitatif la profondeur d'usinage $\Delta R(\alpha)$ et les coordonnées de la parabole génératrice $Y(\alpha)$ et $Z(\alpha)$ pour une distance frontale 2a = 50 mm et un miroir de diamètre D = 30 mm, le rayon R étant de 141,308 mm.

TABLEAU

| $\alpha$ (degrés) | Y (mm) | Z (mm) | $\Delta$ R (µm) |
|---|---|---|---|
| -6,054 | 60,046 | 36,057 | 188,1 |
| -5,449 | 59,086 | 34,912 | 168,2 |
| -4,843 | 58,116 | 33,775 | 152,1 |
| -4,238 | 57,136 | 32,646 | 139,4 |
| -3,632 | 56,147 | 31,525 | 129,7 |
| -3,027 | 55,148 | 30,414 | 122,7 |
| -2,421 | 54,140 | 29,311 | 117,9 |
| -1,816 | 53,120 | 28,218 | 115,0 |
| -1,210 | 52,091 | 27,135 | 113,4 |
| -0,605 | 51,051 | 26,062 | 112,9 |
| 0,000 | 50 | 25 | 112,8 |
| 0,605 | 48,937 | 23,946 | 112,7 |
| 1,210 | 47,863 | 22,909 | 112,1 |
| 1,816 | 46,778 | 21,882 | 110,5 |
| 2,421 | 45,681 | 20,867 | 107,2 |
| 3,027 | 44,572 | 19,866 | 101,8 |
| 3,632 | 43,450 | 18,879 | 093,6 |
| 4,238 | 42,316 | 17,906 | 081,9 |
| 4,843 | 41,169 | 16,949 | 066,2 |
| 5,449 | 40,009 | 16,007 | 045,8 |

Ce tableau montre que la distance entre la parabole génératrice à réaliser et le cercle 8 correspondant à l'ébauche varie de 20 µm à 188,1 µm. Pour passer du tore au paraboloïde sur la portion correspondant au miroir de diamètre D = 30 mm, le volume de matière à dissoudre électrolytiquement est dans ce cas de 78,19 mm$^3$.

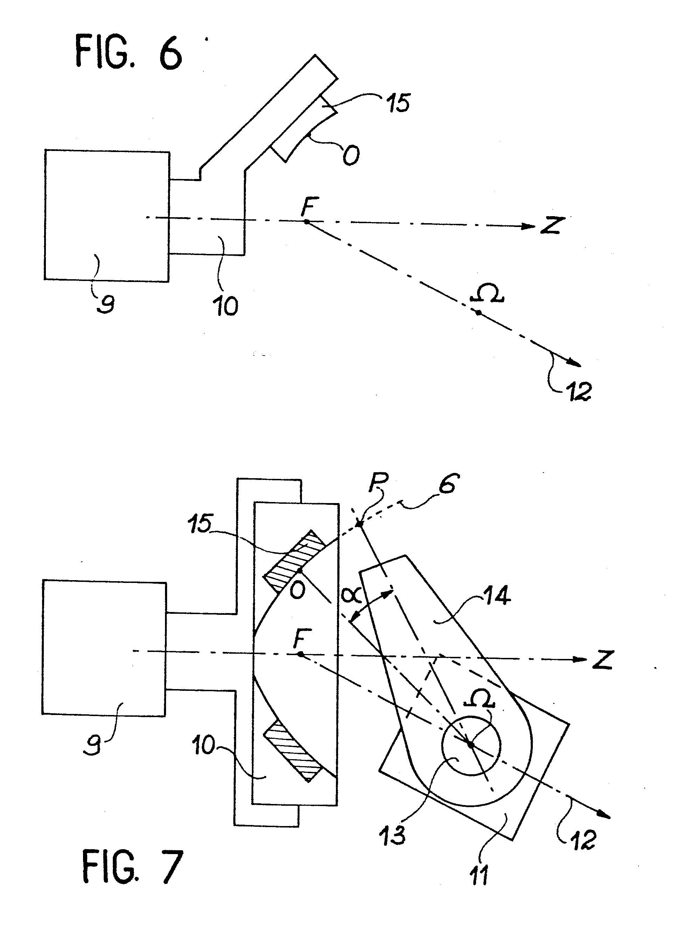

On a représenté à titre d'exemple non limitatif sur les figures 6 et 7 un appareil permettant de réaliser successivement la rectification mécanique,

16                                    0143014

puis la finition électrolytique d'un miroir conformément à l'invention, dans le cas où un seul miroir 15
est mobile en rotation autour de l'axe Z par l'intermédiaire d'un bras porte-miroir 10 (figure 6) et dans
le cas où une couronne de miroirs 15 est mobile en
rotation autour de l'axe Z, par l'intermédiaire d'une
couronne porte-miroir 10 (figure 7).

Cet appareil comprend dans les deux cas,
bien qu'on l'ait représenté seulement sur la figure 7,
un bras 14 servant de porte-meule pour la rectification mécanique correspondant à l'usinage préalable du
cercle 8 de rayon R (figure 5) et de porte-outil
d'usinage électrolytique pour la réalisation de la parabole 6. Ce bras 14 est mobile en rotation autour
d'un axe parallèle à l'axe X (donc perpendiculaire au
plan de la figure 7) et passant par le centre $\Omega$ du
cercle 8. Cet axe de rotation est matérialisé par une
broche 13. Cette broche 13 peut être déplacée le long
de l'axe 12 joignant le foyer F au centre $\Omega$ du cercle
8, par translation sur le bâti 11.

Le ou les miroirs 15 sont entraînés en rotation par l'intermédiaire d'une broche 9 solidaire du
bras ou de la couronne 10. La broche 9 est calée à
26,56° (arctg 1/2) par rapport à l'axe 12. L'axe Z de
la broche 9 coupe l'axe 12 au point F.

Lors de la fabrication d'un miroir déterminé
qui fixe la valeur de f=OF=2a, la broche 13 est bridée
sur le bâti 11 au point $\Omega$ tel que $\Omega O = 2\sqrt{2} OF$, c'est-à-
dire à la distance $f\sqrt{5}$ du point F.

Le bras 14, mobile en rotation autour de la
broche 13 permet aussi une translation radiale de faible amplitude de son extrémité porte-outil. Cette
translation assure l'avance de la meule de rectification de l'ébauche du miroir. Le mouvement de coupe est
imprimé par la combinaison d'un mouvement de va-et- vient du bras 14 d'amplitude $\alpha$, de part et d'autre du segment $0\,\Omega$, autour de l'axe 13 et de le rotation des miroirs 15 autour de l'axe Z, par l'intermédiaire de la broche 9.

Après la rectification mécanique, l'ébauche du miroir a la forme du tore d'axe Z et dont la génératrice correspond à une portion du cercle centrée en $\Omega$ et de rayon R.

La finition électrolytique, chargée de transformer le tore en paraboloïde, est assurée par un jet d'électrolyte véhiculant une intensité constante $\underline{i}$, optimisée pour le meilleur polissage électrolytique. Comme on l'a mentionné précédemment, la profondeur d'usinage $\Delta R$ est variable en fonction de l'angle $\alpha$ que fait la direction $\Omega P$ (P étant le point de stagnation du jet d'électrolyte sur le miroir) avec l'axe $0\,\Omega$.

L'intensité $\underline{i}$ de l'électrolyse étant maintenue constante, cette variation de profondeur d'usinage $\Delta R(\alpha)$ est obtenue par variation du pas $\Delta\alpha(\alpha)$ d'avance du bras 14 autour de l'axe X :

$$\Delta\alpha(\alpha)=\frac{K}{R\Delta R(\alpha)y_p(\alpha)} \qquad \text{avec} \qquad K=\frac{kiM}{\rho FV\omega}$$

où $\Delta R(\alpha)$ est l'ensemble des valeurs tabulées (cf le tableau précédent) ;

- $y_p$ est la distance à l'axe Z du point d'intersection P de la parabole génératrice 6 et de la droite $\Omega P$ qui fait l'angle $\alpha$ avec la droite $0\,\Omega$,
- M est la masse atomique du métal usiné,
- v la valence avec laquelle ce métal se dissout,
- $\rho$, sa masse spécifique,
- F le Faraday, c'est-à-dire 96500 Coulombs,
- k est le rendement de la réaction électrochimique de dissolution du métal ; sa valeur numérique, comprise entre 0 et 1, est obtenue expérimentalement pour les conditions précises de l'usinage : même électrolyte, même intensité, même température ...,

- $\omega$ est la vitesse angulaire de la broche porte-miroir 9 ; cette vitesse angulaire est constante quand le jet d'électrolyte tombe sur le miroir ; c'est-à-dire que la rotation de la broche 9 est à vitesse uniforme dans le cas de la couronne de miroirs ; dans le cas du miroir unique, cette vitesse angulaire est alternée, mais alors les plages d'accélération et de décélération sont situées en dehors de la zone où le jet d'électrolyte tombe sur le miroir.

On pourrait bien sûr obtenir la même variation de profondeur d'usinage $\Delta R(\alpha)$ nécessaire pour passer du tore au paraboloïde en jouant sur un ou plusieurs autres paramètres intervenant dans la formule :

$$\Delta R(\alpha) = \frac{kiM}{\rho F v \omega R y_p \Delta\alpha}$$

par exemple, en pilotant l'intensité $i(\alpha)$ selon la loi de consigne :

$$i(\alpha) = \frac{\Delta R(\alpha) R y_p \rho F v \omega}{kM} \times d$$

où d est l'incrément angulaire en radian du bras porte-outil 14 entre 2 passages successifs du jet sur le miroir, les autres paramètres gardant la même signification qu'avant.

La rugosité spécifiquement induite par l'usinage électrolytique est une onde de fréquence spatiale égale au pas d'avance du jet d'électrolyte, soit $P(\alpha)$, et d'amplitude $\mathcal{R}=0,5P(\alpha)^2 \Delta R(\alpha)/\emptyset_j^2$, formule dans laquelle $\Delta R(\alpha)$ reste la profondeur d'usinage effectuée à l'angle $\alpha$ ; $\emptyset_j$ est le diamètre du jet d'électrolyse utilisé ; comme $P(\alpha)$ est égal au produit de R par l'incrément $\Delta\alpha(\alpha)$, la rugosité d'usinage est

$$\mathcal{R} \simeq \frac{0,5k^2}{\emptyset_j^2 \Delta R(\alpha) y_p^2}$$

Pour limiter l'amplitude de la rugosité spécifiquement induite par l'usinage électrolytique à une valeur $\varepsilon$ donnée à l'avance, il faudrait choisir le diamètre du jet supérieur à :

$$\emptyset_j \geqslant \left[ \frac{0,5k^2}{\Delta R(\alpha){y_p}^2} \times \mathcal{E} \right]^{1/2}$$

Cette relation est pratiquement toujours respectée.

Par exemple, et pour rester homogène avec l'amplitude des défauts de forme laissés par la rectification mécanique si on veut limiter la rugosité à la borne supérieure $\mathcal{E} = 0,2$ µm, la formule précédente montre que le diamètre minimum de jet dans le cas envisagé précédemment à titre d'exemple est $3 \times 10^{-6}$ pour une frontale f de 50 mm. Ce diamètre minimum de jet d'électrolyte n'a pas de sens physique ; cette condition est toujours réalisée et la rugosité d'usinage électrolytique est toujours négligeable.

Dans l'application de l'invention à la fabrication de miroirs pour faisceaux lumineux et conformément à un autre aspect intéressant de l'invention, le miroir est réalisé à partir d'un substrat en graphite sur lequel est déposée une couche de quelques centaines de microns d'épaisseur de métal. Compte tenu de la profondeur de l'usinage électrolytique mentionnée précédemment, l'épaisseur de cette couche de métal peut être de 250 µm à 350 µm. Ce métal peut être du tungstène, du molybdène, du rhénium ou du rhodium. Ces métaux peuvent être déposés soit par électrolyse, soit par décomposition d'une phase vapeur (vapodéposition). Ils sont donc extrêmement purs et, par conséquent meilleurs conducteurs thermiques que les mêmes métaux présentés à l'état massif. Les métaux vapodéposés présentent aussi l'avantage d'être exempts de cavités, fissures ou retassures. Ces qualités métallurgiques des métaux déposés font que la qualité optique de la surface n'est jamais limitée par le matériau mais par la qualité de son usinage.

Le graphite utilisé pour réaliser le substrat se présente sous la forme d'un bloc pratiquement isotrope qui doit être distingué des matériaux composites à base de fibres de carbone ou analogues. En effet, ces matériaux composites sont fortement anisotropes, de sorte que leur forme change avec la température, et ils ne résistent pas à des températures supérieures à 500°C. Au contraire, le graphite isotrope utilisé selon l'invention permet de conserver les formes et présente une tenue en température très supérieure (une température de 1300°C peut facilement être atteinte sous vide). Etant donné que le coefficient de dilatation thermique du graphite doit être très voisin de celui du métal déposé, les nuances de graphite "5890" ou "1116" de Carbone Lorraine et "FE98" de SCHUNK-EBE peuvent avantageusement être employées avec le molybdène ou le tungstène.

L'utilisation d'un substrat en graphite garantit la meilleure stabilité à long terme de la forme du miroir, la meilleure conservation de la qualité optique dans les conditions d'emploi sévère de ces miroirs (faisceaux lumineux très intenses tels que faisceaux laser de puissance). En effet, les déformations sont réduites à la fois par la faiblesse des gradients thermiques qui se créent au sein du miroir (bonne conductivité thermique) et par la faiblesse du coefficient de dilatation thermique. Par ailleurs, l'ensemble graphite-tungstène vapodéposé (de préférence avec une couche intermédiaire de rhénium de 5 µm d'épaisseur pour barrer la diffusion du carbone dans le tungstène) résiste remarquablement bien à la fatigue thermique.

La fabrication d'un miroir ainsi réalisé conformément à l'invention se décompose de la façon suivante :

- réalisation d'un substrat en graphite, la forme de la surface finale du miroir étant ébauchée alors que la face arrière du miroir comportant les moyens de fixation de celui-ci est achevée ;
- déposition du métal (ou des métaux) ;
- usinage de la surface du métal à l'outil de coupe (rectification mécanique) ;
- finition électrolytique de la surface de ce métal ;
- comme pour les autres miroirs, la surface peut ensuite recevoir un revêtement superficiel final lui donnant un coefficient réflecteur compris entre 98% et l'unité (dorure ou revêtement de couches diélectriques).

Un miroir ainsi réalisé permet d'obtenir un excellent compromis entre la dureté superficielle du miroir et la transmission de la chaleur à travers celui-ci. Ces qualités sont particulièrement intéressantes lorsque le miroir est utilisé pour des faisceaux lumineux intenses.

Le procédé de fabrication selon l'invention permet en outre de réaliser des surfaces de très haute qualité présentant une tolérance d'usinage voisine du centième de µm permettant de satisfaire le critère de Rayleigh imposé aux optiques pour rayons X. Les optiques réalisées conformément à l'invention peuvent ainsi être utilisées sur des téléscopes mis en orbite autour de la terre, compte tenu notamment de leur légèreté et de leur grande stabilité dimensionnelle.

On remarquera enfin que le procédé selon l'invention n'est pas limité à la fabrication de miroirs mais peut s'appliquer aussi, dans le domaine de l'optique, à la fabrication de lentilles asphériques. Lorsqu'on sait qu'une optique habituellement constituée de trois lentilles sphériques peut être remplacée par une optique constituée de deux lentilles asphéri-

ques, on voit l'intérêt qu'il y a aussi bien au niveau du poids que de l'encombrement à utiliser le procédé selon l'invention pour la fabrication de lentilles asphériques.

B 8313 GP

REVENDICATIONS

1. Procédé d'usinage de précision de la surface (5) d'une pièce (2) en un matériau conducteur de l'électricité, selon lequel on effectue un usinage préalable par une technique d'usinage connue, afin de donner à la surface à usiner une forme connue (8), caractérisé en ce qu'on effectue ensuite un usinage de la surface (5) par balayage d'un jet d'électrolyte (1) sur toute la surface à usiner, en asservissant la quantité d'électricité délivrée par le jet en chaque point de ladite surface proportionnellement à une profondeur d'usinage ($\Delta R$) à effectuer en ce point pour passer de ladite forme connue (8) à une forme finale (6) désirée pour ladite surface.

2. Procédé selon la revendication 1, caractérisé en ce qu'on asservit la quantité d'électricité délivrée par le jet (1) en modulant la vitesse de balayage du jet sur ladite surface.

3. Procédé selon la revendication 1, caractérisé en ce qu'on asservit la quantité d'électricité délivrée par le jet (1) en modulant l'intensité du courant circulant dans le jet d'électrolyte.

4. Procédé selon l'une quelconque des revendications 1 à 3, caractérisé en ce que l'usinage par balayage d'un jet d'électrolyte (1) est effectué en asservissant la quantité d'électricité délivrée par le jet en chaque point de la surface à rester constante, afin d'obtenir une retouche d'épaisseur constante, indépendamment de la forme de la surface.

5. Procédé selon l'une quelconque des revendications 1 à 3, caractérisé en ce que l'usinage par balayage d'un jet d'électrolyte est effectué en asservissant la quantité d'électricité délivrée par le jet en chaque point de la surface à varier selon une loi

0143014

donnée, afin de passer de ladite forme connue (8) à une forme finale (6) différente de celle-ci.

6. Procédé selon la revendication 5, appliqué à l'usinage de la surface réfléchissante (6) d'un miroir, cette surface présentant, au centre (O) du miroir, des rayons de courbure principaux donnés, caractérisé en ce qu'on effectue ledit usinage préalable, de façon à donner à la surface à usiner une forme connue (8) différente de la forme de la surface réfléchissante à réaliser et présentant, au centre (O) du miroir, des rayons de courbure principaux identiques à ceux de ladite surface réfléchissante (6).

7. Procédé selon la revendication 6, caractérisé en ce que, ladite surface réfléchissante étant une surface parabolique d'axe (Z) donné et dont la parabole génératrice (6) définit, au centre (O) du miroir, un cercle osculateur (7) donné, on effectue ledit usinage préalable de façon à donner à la surface à usiner la forme d'un tore dont l'axe est confondu avec l'axe (Z) de la surface parabolique et dont le cercle générateur (8) est concentrique avec ledit cercle osculateur (7) au centre du miroir et présente un rayon (R) inférieur d'une valeur prédéterminée à celui du cercle osculateur.

8. Procédé selon l'une quelconque des revendications 6 et 7, caractérisé en ce qu'on réalise le miroir à partir d'un substrat en graphite sur lequel on dépose au moins une couche de métal pour former la surface réfléchissante du miroir, le métal étant choisi dans le groupe comprenant le tungstène, le molybdène et le rhodium.

9. Procédé selon la revendication 8, caractérisé en ce qu'on dépose ladite couche de métal sur une sous-couche de rhénium préalablement déposée sur le substrat en graphite.

10. Miroir pour faisceau lumineux, usiné selon le procédé de l'une quelconque des revendications 8 et 9, caractérisé en ce qu'il comprend un substrat en graphite et au moins une couche de métal formant la surface réfléchissante du miroir, le métal formant ladite couche étant choisi dans le groupe comprenant le tungstène, le molybdène, et le rhodium.

11. Miroir selon la revendication 10, caractérisé en ce qu'il comprend de plus une sous-couche de rhénium disposée entre le substrat en graphite et la couche de métal.

B 8313 GP

FIG. 1

FIG. 2a

FIG. 2b

FIG. 3

FIG. 4

$$\emptyset - 2e - \frac{4ed^2}{\emptyset^2}$$

$$\emptyset - 2e$$

FIG. 5

FIG. 6

FIG. 7

Office européen
des brevets

**RAPPORT DE RECHERCHE EUROPEENNE**

0143014

Numéro de la demande

EP 84 40 1818

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 171 763 (ATELIERS DE CONSTRUCTION LAVALETTE) * Page 1; page 2, colonne 1, alinéas 1,2 * | 1 | B 23 H 9/00<br>C 25 F 7/00<br>G 02 B 5/08<br>B 23 H 9/16 |
| A | | 2 | |
| | --- | | |
| Y,D | FR-A-1 526 671 (ASSOCIATED ENGINEERING) * Résumé point 1 * | 1 | |
| | --- | | |
| A | FR-A-2 215 631 (SEROFIM) * Revendications 1,2,6,8 * | 8,10 | |
| | --- | | |
| A | US-A-3 589 996 (ITEK CO.) * Colonne 2, lignes 27-54 * | 1 | |
| | ----- | | |

DOMAINES TECHNIQUES RECHERCHES (Int. Cl.4)

B 23 P
C 25 F
G 02 B

Le présent rapport de recherche a été établi pour toutes les revendications

| Lieu de la recherche | Date d'achèvement de la recherche | Examinateur |
|---|---|---|
| LA HAYE | 31-01-1985 | DAILLOUX C. |